# EUROPEAN PATENT SPECIFICATION

(11) **EP 0 823 343 B1**
(45) Date of publication and mention of the grant of the patent: **11.07.2001**
(21) Application number: 97113448.1
(22) Date of filing: 05.08.1997
(51) Int. Cl.: B60D 1/02, B60D 1/36

(54) **Electronic control and safety device for the connection between a tractor and towed vehicle**
Elektronisches Steuergerät und Sicherheitsvorrichtung für die Verbindung zwischen einem Schlepper und einem Anhänger
Commande électronique et dispositif de sécurité pour la connexion entre un tracteur et une remorque

(30) Priority: 08.08.1996 IT BO960434
(43) Date of publication of application: 11.02.1998
(73) Proprietor: CBM S.p.A., 41100 Modena (IT)
(72) Inventor: Cornia, Enrico Maria, 41100 Modena (IT)
(74) Representative: Provvisionato, Paolo

(56) References cited:
- EP-A- 0 388 848
- AT-A- 392 940
- DE-A- 3 226 360
- DE-A- 3 706 258
- DE-A- 3 907 763
- DE-A- 3 918 083
- US-A- 5 455 557

## Description

This invention concerns an electronic control and safety system for the connection between a tractor and a towed vehicle, such a system according to the preamble of claim 1 is known from DE-A-3 918 083. The invention was developed in particular for the connection between an agricultural tractor, such as for example a farm tractor, and a general type of trailer, but may also be usefully applied to other types of vehicles.

Agricultural machines are used to tow trailers over ground which may also be very uneven, with the result that the two vehicles connected together are subject to relative movements that can determine high stresses on the tractor tow hitch. In order to ensure greater driving safety of the tractor or towing vehicle, the system as per this invention aims at maintaining the coupling between the tractor and the trailer under constant control, so that any irregularity is immediately signalled, for example by means of acoustic and/or luminous warnings in the driver's cabin.

More in general, the aim of this invention is to provide an electronic control and safety system for the connection between a tractor and a towed vehicle which provides indications that assist the driver of the vehicle in the connecting and/or towing operations of the towed vehicle.

The fundamental characteristics of such a system are indicated in claim 1 hereunder.

The system of this invention comprises a detection device situated on the tow hitch and which, in one of the simplest embodiments, provides an enabling signal to an electronic control circuit when the pin is in the blocking position.

The detection device may also provide one or more signals to the control circuit, indicating the level of stress which the towing eye of the trailer exercises on the tow hitch according to at least one predetermined traction or bending direction.

The system may further comprise at least one additional contactless laser or ultrasonic detection sensor which provides a continuos output signal proportional to the distance of the eye of a trailer from the tow hitch.

Further characteristics and advantages of this invention will emerge from the description which follows, with reference to the attached drawings, provided merely as non-binding example, in which:
- figure 1 is a side-view diagram of an agricultural tractor showing the main elements of the invention and their position in a first embodiment,
- figure 2 is an enlarged diagrammatic view of the main elements of the invention shown in figure 1,
- figure 3 is a view from above of a tow hitch and a towing eye of a trailer in a functioning phase of a more complex embodiment of the invention, and
- figure 4 is a lateral cross-section along the line IV-IV in figure 3.

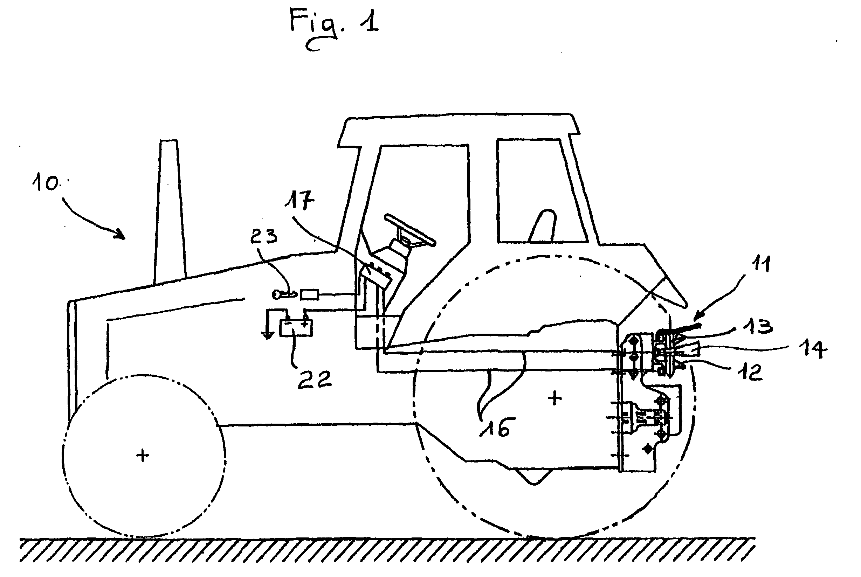

With reference now to figure 1, a tow hitch 11 of the generally known type is mounted on the rear part of a tractor or towing vehicle, which in the illustrated example is an agricultural tractor 10, the tow hitch comprising an opening 12 which can be crossed by a blocking pin 13 slidable from an open or withdrawn position to a closed position, illustrated in detail in figure 2. The pin 13 can be operated manually, or automatically or semi-automatically by means of mechanisms known in the tow hitch sector and which are not discussed in detail here. The opening 12 of the tow hitch is shaped so as to accommodate a towing eye 14 positioned at the end of the drawbar of a trailer (not illustrated in the figures). In the closed position, the pin 13 passes through a circular opening 15 of the eye.

As better described below, one or more detection members are mounted on the tow hitch 11 and are connected by means of leads 16 to an electronic control circuit positioned inside a box 17 situated inside the driving cabin of the tractor 10. On the box 17, warning and signalling elements are mounted, such as signalling lamps 18, 19, acoustic signalling members 21, and also, in addition or alternatively, segment or bar visual indicators, liquid crystal alphanumeric and/or graphic displays, active matrix displays and the like, according to the information and the functions to be displayed or made accessible to the driver. On the box 17, user interface members are also mounted which, in the simple case shown in the figures, can be limited to just a silencing button 20.

Numerous variations can naturally be foreseen regarding the positioning of the electronic control circuit which can, for example, be inserted inside the vehicle dashboard, or placed close to the tow hitch, or in any other position which is more sheltered or easily accessible. The visual and acoustic warning and signalling elements, like all the user interface members, can also be fitted on the vehicle dashboard or placed in another position where they can easily be seen by the driver.

The electronic control circuit is powered by a battery 22 of the vehicle and is connected to the ignition key 23. In detail, the control circuit can, in the simplest cases, be made entirely with discrete components or may comprise an embedded type microprocessor, or also, in addition or alternatively, a microprocessor or systems based on FPGA or on custom chips, also with the integration of analogue and digital functions on the same chip.

As can be seen in diagrammatic form in figures 1 and 2, on the tow hitch 11, two contactless proximity sensors 24, 25 of the optical, laser, magnetic, ultrasonic type or of another known type are mounted. The sensors may be fixed on the surface of the tow hitch or may be accommodated partially or totally in housings provided on the body of the tow hitch. The sensors 24, 25 are positioned, respectively, close to the base 26 of the opening 12, and to the engaging zone of the blocking pin 13 in the closed position, in particular close to the coupling bushing 27 of the pin 13. If Hall-effect magnetic sensors are used, it is particularly advisable to house these sensors in pre-arranged recesses in the body of the hitch, fixing them with cast resin so that the sensors become an integral part of the tow hitch.

Force sensors 28, for example load cells, strain gages and the like, are mounted on the lower lip 12a of the opening 12, in order to detect the stress of the eye 14 on the towing point, preferably along three axes at right angles to each other. By way of a non-binding example, the sensors 28 are selected so as to detect traction/compression and bending stresses within ±100 KN and to allow overloading equal to at least 200% of the scale limit, with a precision and resolution of at least 1% of the scale limit.

In a preferred embodiment, the force sensors comprise at least one strain gage applied to the outer wall of the hitch, preferably in the maximum deflection area 28a of the lower lip 12a of the opening 12, as shown in figure 2. It was in fact found that the most dangerous stresses in terms of safety, i.e. the stresses of the eye on the tow hitch in a vertical direction, cause a bending of the lower lip 12a which can easily be detected with a sensor situated in the area 28a. This area 28a is also protected against contact with the eye, making it possible to use a simple strain gage without it being necessary to take particular steps to protect its integrity. Furthermore, the area 28a is easily accessible, both for fitting of the sensor and electrically connecting it, and for any inspection for maintenance and repair work.

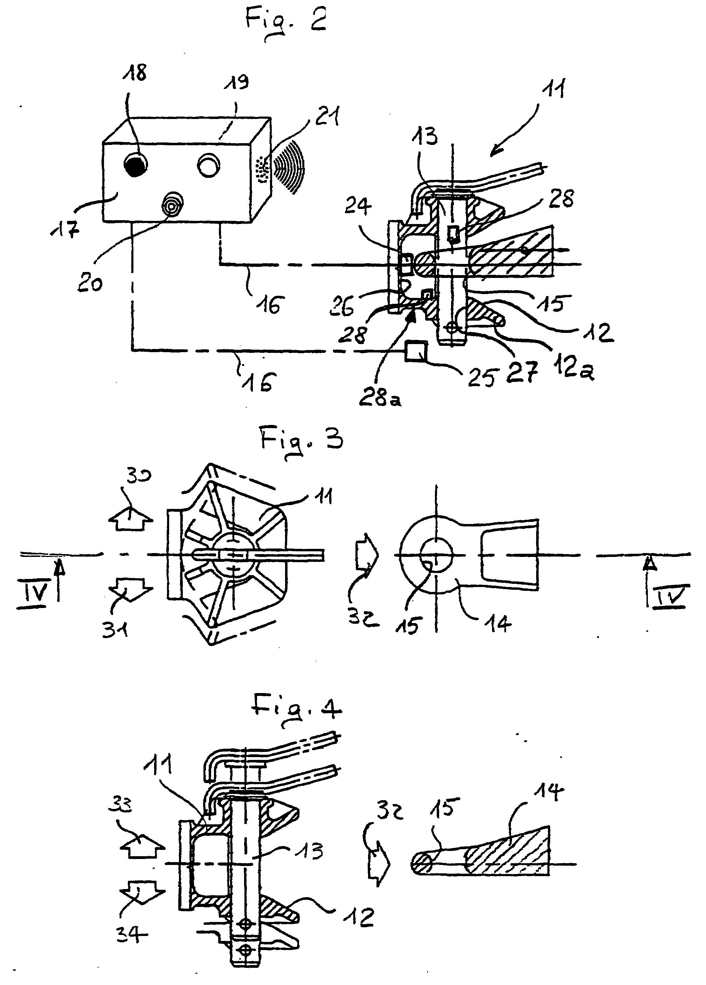

In figures 3 and 4, additional contactless sensors of the laser or ultrasonic detection type, or also the infrared, radio, etc. type, are mounted on the tow hitch 11 or on its support to detect the distance between the eye and the tow hitch. Generally, at least three sensors are necessary for completely detecting the eye position. If, however, the hitch has been previously positioned at the same height as the eye, then two sensors are sufficient to univocally identify the relative position between the tow hitch and the eye.

For the functioning of the above-described control system, when the towing vehicle 10 is started up the electronic control circuit is also activated. When an eye 14 is positioned in the opening 12 of the tow hitch, the sensor 24 located on the bottom 26 of the opening provides an enabling signal to the electronic circuit which controls, for example, the switching off of the lamp 19. Similarly, when the pin 13 is moved to the blocking position illustrated in figure 2, the sensor 25 located close to the bushing 27 provides an enabling signal to the electronic circuit which, for example, controls the switching off of the lamp 18.

On the contrary, when the pin 13 is raised and the eye 14 is removed from the opening 12 of the hitch, the sensors 24, 25 are no longer able to provide the respective enabling signals to the electronic control circuit, which consequently causes the activation of the acoustic indicator 21 and simultaneously switches on the one and/or the other lamp 18, 19. The acoustic indicator can be switched off manually by means of the silencing button 20, while for safety reasons it is preferable that the indicator lamps remain on to indicate the absence of an eye in the opening of the hitch and/or the opening position of the hitch itself. These two indications, based on signals proved by the sensors 24, 25, are particularly important since they limit, for example, the risk of a driver starting up the engine and forgetting to block by means of the pin 13 the eye of a trailer already positioned in the opening of the hitch. Moreover, while driving the tractor, the driver's attention is immediately drawn to an extremely dangerous situation, due to the possibility of repeated stresses on the hitch inadvertently causing a shifting of the pin 13 from its blocking position in the opening of the hitch with the risk of a subsequent sudden uncoupling of the trailer.

Furthermore, during towing the control and safety system continuously detects - by means of the force sensors 28, the stresses on the tow hitch caused by the trailer and transmitted through the drawbar and the eye 14. In this case, a graphic or bar display controlled by the control circuit on the basis of the information provided by the sensors 28 gives the driver a constant visualisation of the status of the traction on the hitch and the direction thereof. If the safety limits, set by calibrating the control circuit to a predetermined threshold value, are exceeded, visual and/or acoustic alarm signals are activated. The signal which indicates an increase in stress of the eye on the lower part of the opening 12 of the hitch is particularly important, since if the threshold values are exceeded this could cause a nose-up of the tractor, with a consequent loss of manoeuvrability. The indication of such an irregular status allows an immediate reaction of the driver who can, for example, slow down the vehicle to keep it under control in complete safety.

As illustrated in figures 3 and 4, the present invention is particularly helpful when connecting a trailer even without the coupling point being visible. When the trailer eye is positioned at a relatively close distance with respect to the tow hitch, the contactless laser or ultrasonic detection sensors provide information signals to the control circuit regarding the spatial position of the eye. The control circuit processes the information signals so as to visualise the position of the eye with respect to the hitch on a graphic display. On the basis of the position information provided by the control circuit and indicated on the display, the driver can manoeuvre the tractor or the tow hitch support structure so as to move the hitch sideways (arrows 30, 31 in figure 3), move it closer (arrows 32 in figures 3, 4) or raise and lower it (arrows 33, 34 in figure 4) with respect to the trailer eye 14.

Without prejudice to the principle of the invention, the embodiments and the realisation details can naturally vary widely with respect to what is described and illustrated, without going beyond the framework of this invention as defined in the claims.

## Claims

1. Electronic control and safety system for the connection between a tractor and a towed vehicle, the tractor comprising a tow hitch with an opening (12) comprising a lower lip . (12a), adapted to house and block the eye of the drawbar of the towed vehicle, comprising:
- at least one detection sensor (25, 28), mounted on the tow hitch to provide an output signal, the at least one detection sensor (25, 28) being fitted on the lower lip (12a) of the opening (12),
- an electronic control circuit operatively coupled to at least one detection sensor to receive the signal, and
- at least one visual type (18, 19) or acoustic indicator (21) enabled or disabled by the electronic control circuit according to the value of the output signal provided by the at least one detection sensor,
characterised in that the at least one detection sensor is selected within a group of sensors comprising:
- force sensors (28) fitted on the lower lip (12a) and providing a continuous output signal proportional to the bending of the lower lip caused by the stresses of the eye of a trailer on the tow hitch, and
- detection sensors or contactless proximity sensors (25) mounted close to the engaging zone (27) of the tow hitch blocking pin (13), and providing an output enabling signal to the electronic circuit when the pin (13) is moved to the blocking position.

2. Control and safety system according to claim 1,
characterised in that it comprises a plurality of force sensors (28) to provide a corresponding number of output signals proportional to the overall traction, compression and bending stresses exercised on the hitch by the trailer eye.

3. Control and safety system according to claim 1,
characterised in that the force sensors are of the strain gage type and are fitted on the outer wall of the tow hitch (11), in a maximum deflection area (28a) of the lower lip (12a) of the opening (12).

4. Control and safety system according to any of the previous claims, characterised in that the at least one visual or acoustic indicator is positioned close to the tractor driving seat.

5. Control and safety system according to any of the previous claims, characterised in that the at least one visual or acoustic indicator (18, 19, 21) is mounted on the tractor dashboard.

6. Control and safety system according to any of the previous claims, characterised in that it also comprises at least one silencing button (20) to manually disable the at least one visual or acoustic indicator (18, 19, 21).

7. Control and safety system according to claim 1,
characterised in that it further comprises at least one additional contactless laser or ultrasonic detection sensor which provides a continuous output signal proportional to the distance of the eye of a trailer from the tow hitch.

## Patentansprüche

1. Elektronisches Steuer- und Sicherheitssystem für die Verbindung zwischen einem Traktor und einem gezogenen Fahrzeug, wobei der Traktor eine Zugvorrichtung mit einer Öffnung (12) umfasst, die eine untere Lippe (12a) umfasst, die so ausgelegt ist, dass sie den Ring der Zugstange des gezogenen Fahrzeugs aufnimmt und verriegelt, umfassend:
- mindestens einen Erfassungssensor (25, 28), der auf der Zugvorrichtung angebracht ist, um ein Ausgangssignal zu liefern, wobei der mindestens eine Erfassungssensor (25, 28) auf der unteren Lippe (12a) der Öffnung (12) montiert ist,
- eine elektronische Steuereinheit, die wirksam an mindestens einen Erfassungssensor angekoppelt ist, um das Signal zu empfangen, und
- mindestens einen visuellen (18, 19) oder akustischen Anzeiger (21), der von der elektronischen Steuereinheit gemäß dem Wert des von dem mindestens einen Erfassungssensor gelieferten Ausgangssignals aktiviert oder deaktiviert wird,
**dadurch gekennzeichnet,**
dass der mindestens eine Erfassungssensor aus einer Gruppe von Sensoren ausgewählt wird, die folgendes umfasst:
- auf der unteren Lippe (12a) montierte Kraftsensoren (28), die ein kontinuierliches Ausgangssignal liefern, das proportional zu der Biegung der unteren Lippe ist, die durch die Belastungen des Rings eines Anhängers auf der Zugvorrichtung verursacht wird, und
- in der Nähe der Eingriffszone (27) des Verriegelungsstifts (13) der Zugvorrichtung angebrachte Erfassungssensoren oder kontaktlose Näherungssensoren (25), die ein Ausgangs-Aktivierungssignal an die elektronische Schaltung liefern, wenn der Stift (13) in die Verriegelungsposition bewegt wird.

2. Steuer- und Sicherheitssystem nach Anspruch 1, **dadurch gekennzeichnet,** dass es mehrere Kraftsensoren (28) umfasst, die eine entsprechende Anzahl von Ausgangssignalen liefern, die proportional zu den gesamten, von dem Anhängerring auf das Zuggeschirr ausgeübten Zug-, Druck-und Biegebelastungen sind.

3. Steuer- und Sicherheitssystem nach Anspruch 1, **dadurch gekennzeichnet,** dass die Kraftsensoren Dehnungsmesser sind und auf der Außenwand der Zugvorrichtung (11) in einem Bereich (28a) der maximalen Durchbiegung der unteren Lippe (12a) der Öffnung (12) angebracht sind.

4. Steuer- und Sicherheitssystem nach einem der obigen Ansprüche, **dadurch gekennzeichnet,** dass der mindestens eine visuelle oder akustische Anzeiger in der Nähe des Fahrersitzes des Traktors angeordnet ist.

5. Steuer- und Sicherheitssystem nach einem der obigen Ansprüche, **dadurch gekennzeichnet,** dass der mindestens eine visuelle oder akustische Anzeiger (18, 19, 21) auf dem Armaturenbrett des Traktors angebracht ist.

6. Steuer- und Sicherheitssystem nach einem der obigen Ansprüche, **dadurch gekennzeichnet,** dass es außerdem mindestens eine Stillschaltungstaste (20) zur manuellen Deaktivierung des mindestens einen visuellen oder akustischen Anzeigers (18, 19, 21) umfasst.

7. Steuer- und Sicherheitssystem nach Anspruch 1, **dadurch gekennzeichnet,** dass es weiterhin mindestens einen zusätzlichen kontaktlosen Laser- oder Ultraschall-Detektor aufweist, der ein kontinuierliches Ausgangssignal liefert, das proportional zum Abstand des Ringes eines Anhängers zur Zugvorrichtung ist.

## Revendications

1. Commande électronique et système de sécurité pour la connexion entre un tracteur et un véhicule remorqué, le tracteur comprenant un crochet d'attelage avec une ouverture (12) comprenant une lèvre inférieure (12a), adapté pour loger et bloquer l'oeillet de la barre d'attelage du véhicule remorqué, comprenant :
au moins un détecteur (25, 28), monté sur le crochet d'attelage afin de fournir un signal de sortie, le au moins un détecteur (25, 28) étant ajusté sur la lèvre inférieure (12a) de l'ouverture (12),
un circuit de commande électronique couplé en fonctionnement à au moins un détecteur afin de recevoir le signal, et
au moins un indicateur visuel (18, 19) ou acoustique (21) actionné ou désactivé par le circuit de commande électronique en fonction de la valeur du signal de sortie fourni par le au moins un détecteur,
caractérisés en ce que le au moins un détecteur est sélectionné parmi un groupe de détecteurs comprenant :
des détecteurs de force (28) ajustés sur la lèvre inférieure (12a) et fournissant un signal de sortie continu proportionnel à la courbure de la lèvre inférieure provoquée par les contraintes de l'oeillet d'une remorque sur le crochet d'attelage, et
des détecteurs ou des détecteurs de proximité sans contact (25) montés à proximité de la zone d'engagement (27) de l'axe de blocage du crochet d'attelage (13), et fournissant un signal de sortie d'activation au circuit électronique lorsque l'axe (13) est déplacé en position de blocage. .

2. Système de commande et de sécurité selon la revendication 1, caractérisé en ce qu'il comprend une pluralité de détecteurs de force (28) destinés à fournir un nombre correspondant de signaux de sortie proportionnels à la totalité de la traction, aux contraintes de courbures et de compression qu'exerce l'oeillet de la remorque sur le crochet.

3. Système de commande et de sécurité selon la revendication 1, caractérisé en ce que les détecteurs de force sont du type à enregistrement de déformation et sont ajustés sur la paroi extérieure du crochet d'attelage (11), dans une zone de flexion maximale (28a) de la lèvre inférieure (12a) de l'ouverture (12).

4. Système de commande et de sécurité selon l'une quelconque des revendications précédentes,
caractérisé en ce que le au moins un indicateur visuel ou acoustique est positionné à proximité du siège de conduite du tracteur.

5. Système de commande et de sécurité selon l'une quelconque des revendications précédentes,
caractérisé en ce que le au moins un indicateur visuel ou acoustique (18, 19, 21) est monté sur le tableau de bord du tracteur.

6. Système de commande et de sécurité selon l'une quelconque des revendications précédentes,
caractérisé en ce qu'il comprend également au moins un bouton d'arrêt (20) destiné à désactiver manuellement le au moins un indicateur visuel ou acoustique (18, 19, 21).

7. Système de commande et de sécurité selon la revendication 1, caractérisé en ce qu'il comprend en outre au moins un détecteur sans contact à laser ou à ultrasons supplémentaire qui fournit un signal de sortie continu proportionnel à la distance de l'oeillet d'une remorque par rapport au crochet d'attelage.
